(19) Europäisches Patentamt
European Patent Office
Office européen des brevets

(11) **EP 3 498 981 A1**

(12) **EUROPEAN PATENT APPLICATION**

(43) Date of publication:
**19.06.2019 Bulletin 2019/25**

(51) Int Cl.:
*F01D 11/00* (2006.01)

(21) Application number: **18205908.9**

(22) Date of filing: **13.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.12.2017 IN 201711044794
31.01.2018 GB 201801557**

(71) Applicant: **Rolls-Royce plc**
**London SW1E 6AT (GB)**

(72) Inventors:
• **Nayak, Kali**
**Derby, Derbyshire DE24 8BJ (GB)**
• **Dunk, Matthew**
**Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **IMPROVED SEAL**

(57) A labyrinth seal having a land that comprises an array of polygonal cells, wherein at least 50% of the cells include a planar wall that subdivides the cell. The seal reduces seal leakage and can reduce specific fuel consumption of gas turbine engines that include such seals.

(a)   (b)   (c)   (d)   (e)   (f)   (g)   (h)

**Figure 2**

**Description**

**Field of the Disclosure**

The present disclosure concerns seals, more specifically labyrinth seals that are suitable for use in gas turbine engines.

**Background of the Disclosure**

A labyrinth seal is a type of mechanical seal often found in turbine engines and compressors of turbine engines. The adjective "labyrinth" refers to the seal having a tortuous pathway thorough the seal that helps to minimise and ideally prevent any leakage. Labyrinth seals are often employed to control air or liquid leakage from high pressure regions to low pressure regions. For example, a labyrinth seal may be employed to seal two components together in such a manner to permit a controlled flow (e.g. airflow) from a high pressure region through a sealed boundary to a low pressure region.

A known type of labyrinth seal includes honeycomb seal land i.e. a contacting surface formed in the shape of a hexagonal pattern resembling the hexagonal prismatic wax cells constructed by honey bees in their hives to contain their larvae and stores of honey and pollen. Labyrinth seals with a honeycomb land are typically used in gas turbine engines to prevent seal fin failure and to weaken the effect of rubbing. The honeycomb structures used in such labyrinth seal lands provide a uniform wall surface that is independent of the direction of the flow any fluid through the seal. This means the seal wall resists the flow through friction but does not introduce any additional restrictions.

Such honeycomb labyrinth seals typically include annular metal seals that have an internal surface that comprises a hexagonal honeycomb pattern of the same metal. Such seals are used for various purposes, including controlling fluid flow for drum ventilation, buffering sumps, blade tip clearance and rim sealing, with fluid needing to pass over the worn tops of numerous connecting cells in order for any fluid to leak from the seal.

It is known that one can reduce leakage of a honeycomb labyrinth seal by reducing the size of the honeycomb cells. This makes the fluid pathway through the seal more tortuous or involved i.e. the fluid has to overcome more obstacles to pass through the seal. Reducing honeycomb cell size also undesirably adds cost, adds weight, increases heat generation (e.g. when fins rub on the seal), increases sparking and can increase melting.

For these reasons the design of labyrinth seals typically involves having to balance the positive and negative effects of design changes.

United States patent application US 2009/0072488 A1 discloses a labyrinth seal that comprises a land that comprises a plurality of cells. Each cell comprises a first half of a geometric shape and a second half the geometric shape, the first half being laterally offset relative to the second half. Offsetting or staggering the cell halves is said to provide labyrinth seals that are less dense than certain known labyrinth seals whilst having increased sealing capabilities.

Forming such labyrinth seals with staggered honeycomb patterns marginally reduces the total area of the honeycomb cells. A Computational Fluid Dynamics (CFD) study has shown that such staggered honeycombs are effective only at very low seal clearances i.e. below 0.125 mm (Chougule H. H., Ramerth D. and Ramachandran D., "Low leakage designs for rotor teeth and honeycomb lands in labyrinth seals", ASME Turbo Expo 2008: Power for Land, Sea and Air, Volume 4: Heat transfer, Parts A and B, Paper GT2008-51024, pages 1613-1620). However most of the critical air seals at cruise operate at larger seal clearances where seal leakage reduction and engine performance is vital.

United States patent US 4346904 discloses a honeycomb structure for use in abradable seals.

European patent application EP 1985807 A2 discloses an abradable sealing land for a gas turbine engine.

European patent application EP 1146204 A2 discloses a sealing element for positioning radially outwardly of at least some of the aerofoil blades of a gas turbine engine. The sealing element has a seal structure that is integrally formed and comprises a plurality of inwardly projecting walls.

The present disclosure provides a labyrinth seal that overcomes the disadvantages of the known labyrinth seals or at least provides a useful alternative to such labyrinth seals. The present disclosure also provides a gas turbine engine that includes one or more of the improved (or alternative) labyrinth seals.

**Statement of the Disclosure**

According to a first aspect the present disclosure provides a labyrinth seal having a land that comprises an array of polygonal cells, wherein at least 50% of the cells include a planar wall that subdivides the cell.

Such a seal reduces seal leakage. Several seals are typically used in modern gas turbine engines for ventilating compressor drums and turbine rim flows that over flow at cruise. By reducing fluid leakage, the labyrinth seals of the present disclosure can reduce specific fuel consumption.

The planar wall may extend between opposite corners of the cell.

At least 50% of the cells may include a single planar wall that extends between opposite corners of the cell to subdivide the cell, the planar wall having substantially the same height as the cell.

The planar wall may extend between opposite sides of the cell.

At least 50% of the cells may include a single planar wall that extends between opposite sides of the cell to subdivide the cell, the planar wall having substantially the same height as the cell.

At least 70% of the cells may include a single planar wall that subdivides the cell.

At least 80% of the cells may include a single planar wall that subdivides the cell.

At least 90% of the cells may include a single planar wall that subdivides the cell.

All of the cells may include a single planar wall that subdivides the cell.

The polygonal cells may be hexagonal. The sides of those cells may all have equal length.

The polygonal cells may be octagonal. The sides of those cells may all have equal length.

The polygonal cells may have a total of four sides. Parallel sides of those cells may have equal length. All sides of those cells may have equal length.

According to a second aspect the present disclosure provides a gas turbine engine that includes one or more of the aforementioned labyrinth seals.

The sub-dividing planar walls significantly reduce the bypass flow through the cells. This is because they reduce both the discharge coefficient and the effective area of the cells and the seal. Reducing seal leakage in gas turbine engines can reduce specific fuel consumption by such engines thus saving fuel, reducing fuel costs and benefiting the environment. The sub-dividing planar walls have the effect of reducing the cell size with only a minimal addition of metal. This is important as increasing the metal content of the seal increases the potential for increased heat being generated due to rubbing, which is why simply reducing the cell size of a conventional honeycomb labyrinth seal is undesirable. In contrast, the labyrinth seals of the present disclosure provide lower leakage than conventional honeycomb labyrinth seal and low heat generation due to rubbing.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

The term "labyrinth seal" as used herein means a type of mechanical seal that provides an extended or tortuous path to minimise or ideally prevent leakage.

The term "land" as used herein means the surface of a seal that contacts an axle, pipe or shaft to provide an effective seal.

The term "array of polygonal cells" as used herein means a repeated pattern of polygonal cells arranged on a substrate. The polygonal cells have the same shape or different shape. Typically the polygonal cells have the same shape. The array of polygonal cells can take the form of a honeycomb, the cells however need not be hexagonal in form.

The term "honeycomb" as used herein means an array of polygonal cells, each cell having the same or substantially the same shape. The shape may be hexagonal to resemble beehive honeycomb, however the shape need not be so limited.

The term "planar wall" as used herein means a wall that is substantially planar in shape i.e. substantially flat.

The term "effective clearance" as used herein means the product of physical seal clearance and discharge coefficient of the seal.

The term "radial clearance", as used herein means difference in radius of the seal stator land to the seal rotor fins.

The term "pressure ratio", abbreviated as PR, as used herein means the ratio of seal upstream pressure to seal downstream pressure.

The term "specific fuel consumption", abbreviated as SFC, as used herein means the fuel flow rate divided by the output thrust or power. For long-range, civil aircraft engines, a low SFC is critical as the cost of fuel is typically 15 to 25 per cent of aircraft operating costs.

Other than in the operating examples, or where otherwise indicated, all numbers expressing quantities of ingredients used herein are to be understood as modified in all instances by the term "about".

Throughout this specification and in the claims that follow, unless the context requires otherwise, the word "comprise" or variations such as "comprises" and "comprising", will be understood to imply the inclusion of a stated integer or group of integers but not the exclusion of any other stated integer or group of integers.

## Brief Description of the drawings

Certain aspects or embodiments of the present disclosure are described by way of example only, with reference to the accompanying drawings. In the drawings:

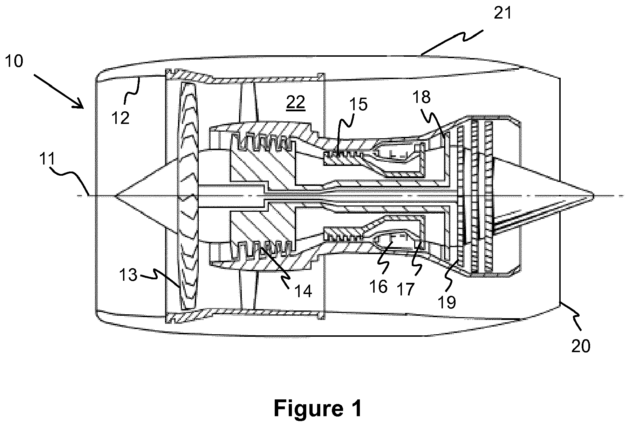

**Figure 1** is a sectional side view of a gas turbine engine.

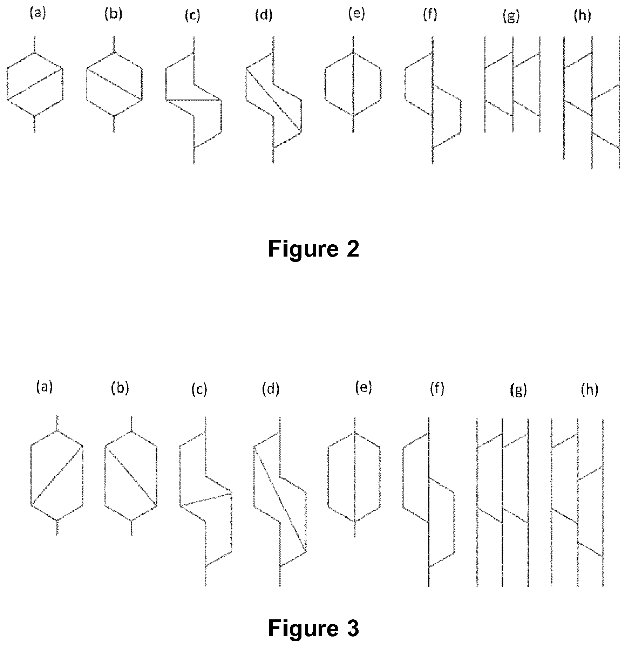

**Figure 2** is a diagrammatic plan view of several embodiments of cells of the labyrinth seal of the present disclosure. In the first, second and fifth embodiments, 2(a), 2(b) and 2(e), the cells are hexagonal with sides of equal length. In the other five embodiments, the cells are octagonal with embodiments 2(c), 2(d) and 2(f) resembling staggered hexagonal cells. The embodiment of 2(g) resembles two aligned left halves of embodiment 2(e). The embodiment of 2(h) resembles staggered left halves of embodiment 2(e).

**Figure 3** is a diagrammatic plan view of several other embodiments of cells of the labyrinth seal of the present disclosure. In the first, second and fifth embodiments, 3(a), 3(b) and 3(e), the cells are hexagonal and elongated. In the other five embodiments, the cells are octagonal with embodiments 3(c), 3(d) and 3(f) resembling staggered elongate hexagonal cells. The embodiment of 3(g) resembles two aligned left halves of embodiment 3(e). The embodiment of 3(h) resembles staggered left halves of embodiment 3(e).

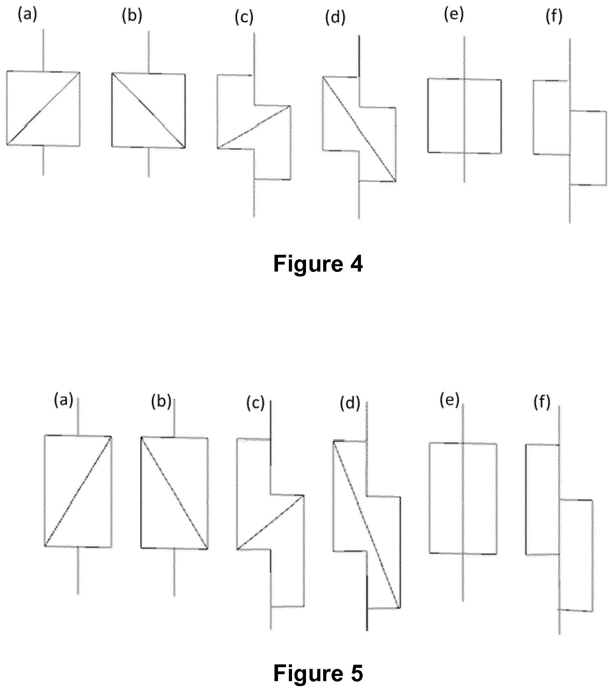

**Figure 4** is a diagrammatic plan view of several other embodiments of cells of the labyrinth seal of the present disclosure. In the first, second and fifth embodiments, 4(a), 4(b) and 4(e), the cells have four sides of equal length i.e. rhombic, and as the sides meet at right angles they are also square. In the other three embodiments, the cells are octagonal with embodiments 4(c), 4(d) and 4(f) resembling staggered square cells.

**Figure 5** is a diagrammatic plan view of several other embodiments of cells of the labyrinth seal of the present disclosure. In the first, second and fifth embodiments, 5(a), 5(b) and 5(e), the cells have four sides with parallel sides having the same length i.e. rectangular. Furthermore the sides meet at right angles. In the other three embodiments, the cells are octagonal and resemble staggered rectangular cells.

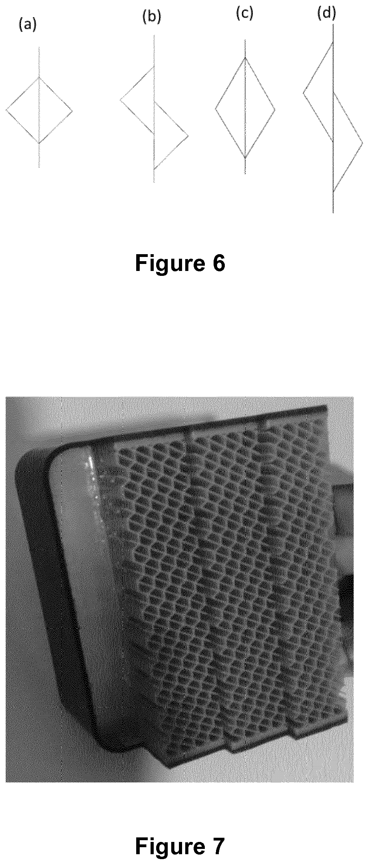

**Figure 6** is a diagrammatic plan view of several other embodiments of cells of the labyrinth seal of the present disclosure. In the first embodiment, 6(a), the cells have four sides of equal length with opposed angles being right angles i.e. square. In the second embodiment, 6(b), the cells have six sides and resemble staggered square cells. In the third embodiment, 6(c), the cells have four sides of equal length but one pair of opposed angles are the same and acute and the other pair of opposed angles are the same and obtuse i.e. rhombic without right angles. The cells could be called diamond-shaped. In the fourth embodiment, 6(d), the cells have six sides and resemble staggered diamond-shaped cells.

**Figure 7** is a view of showing three arrays of polygonal cells aligned alongside each other in a holder for testing fluid leakage. Each land is an array of hexagonal cells and every cell includes a planar wall that subdivides the cell. The sides of the cells all have equal length.

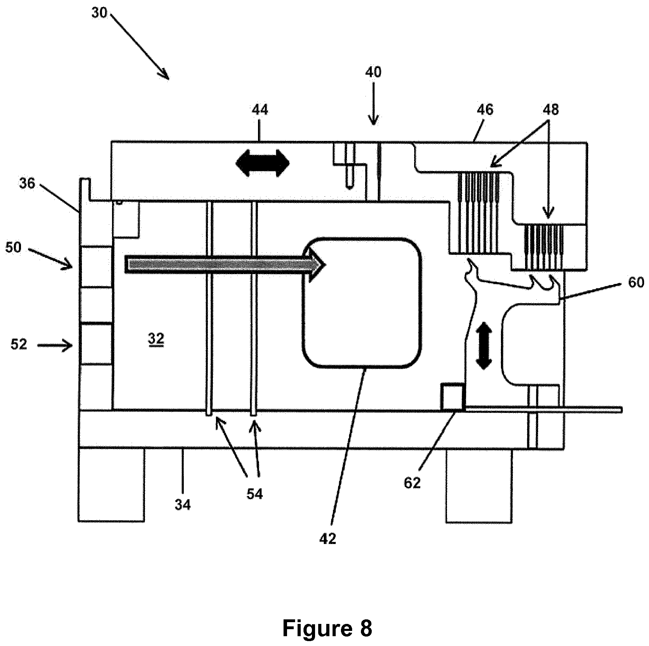

**Figure 8** is a diagrammatic representation of a testing rig for measuring the performance of labyrinth seals of the present disclosure. The operation of the testing rig is described in the Examples.

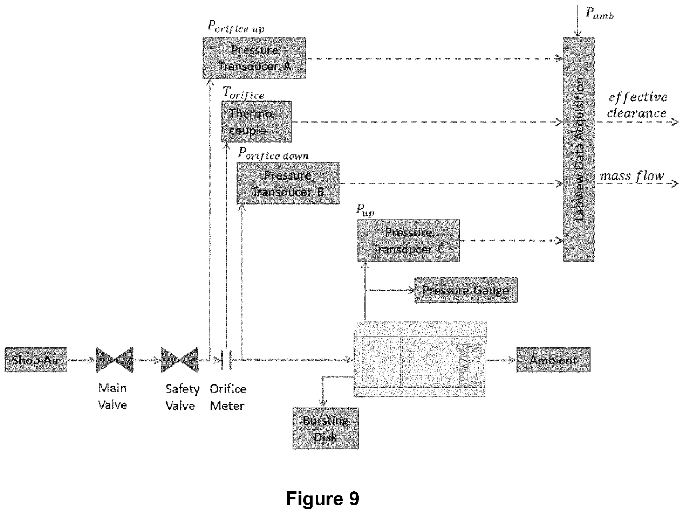

**Figure 9** is diagram that depicts the measurement system schematic experimental set-up for the method that was used to measure the performance of labyrinth seals of the present disclosure. The diagram shows how the test rig shown in Figure 8 was configured for the various flow measurements that were made during testing of the labyrinth seals.

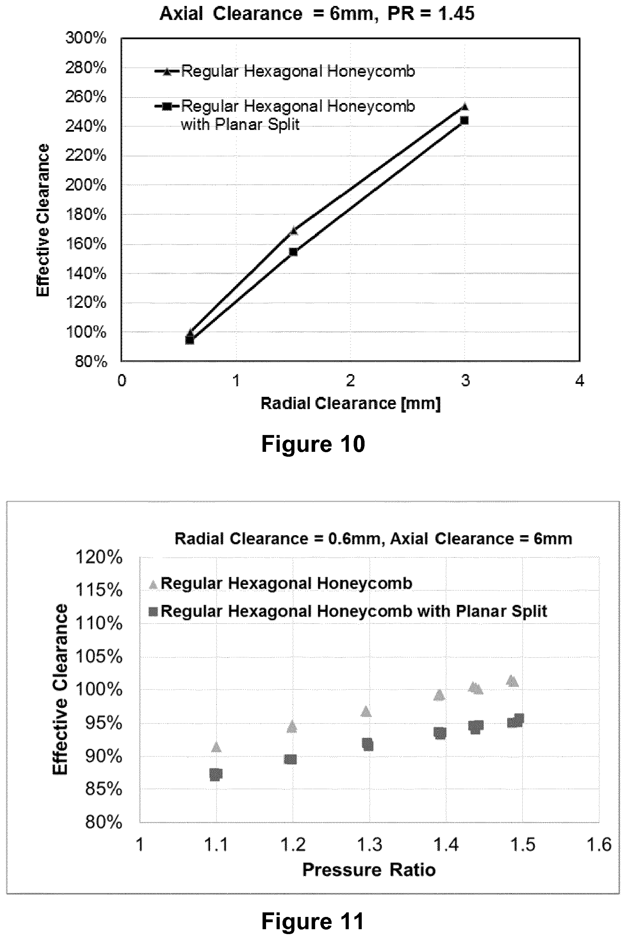

**Figure 10** is a graph showing the results of a test that measured fluid leakage from the lands shown in Figure 7 that have hexagonal cells with sides of equal length and all cells including a planar wall that subdivides the cell and lands that have hexagonal cells with sides of equal length but with none of those cells including a planar wall that subdivides the cell. The graph plots radial clearance data against effective clearance data.

**Figure 11** is a graph showing the results of a test that measured fluid leakage from the lands shown in Figure 7 that have hexagonal cells with sides of equal length and all cells including a planar wall that subdivides the cell and lands that have hexagonal cells with sides of equal length but with none of those cells including a planar wall that subdivides the cell. The graph plots pressure ratio data against effective clearance data.

**Detailed description**

The present disclosure concerns a labyrinth seal and a gas turbine engine that includes one or more such labyrinth seals. Such seals are useful, for example, to control air or liquid leakage from high pressure regions to low pressure regions in turbine engines and compressors of turbine engines.

In broad terms the labyrinth seal of the present disclosure is a land that comprises an array of polygonal cells, wherein at least 50% of the cells include a planar wall that subdivides the cell.

The land can take various forms. It is typically formed around the inner surface of an annular seal. The land is typically formed during the manufacture of the seal.

The land can be made from various materials including metals, metal alloys, plastics and composites. The choice of material is suited to the intended use of the labyrinth seal. When the labyrinth seal is intended for use in or around the combustion equipment of a gas turbine engine, the material must be able to withstand the high temperatures generated by such equipment. In certain embodiments the land is made from Hastelloy® X (aka Hast X), which is a nickel base alloy commercially available from Haynes International Inc that possesses exceptional strength and oxidation resistance up to 1204 °C (2200 °F).

The array may take various forms. It is typically formed as a repeated pattern of similarly shaped cells. Typically the cells are identically shaped. In use, the edges of the cells that extend towards the central axis of the annular seal snugly contact the external surface of the pipe(s) or shaft(s) being sealed by the seal. The array is typically formed during the manufacture of the seal.

When the labyrinth seal operates at relatively lower seal clearance, a large fraction of the seal flow bypasses thru the cells apart from the seal clearance area. Sub-dividing the cells reduces the bypass flow through the cells. This lowers the discharge coefficient and the effective bypass flow area. Reducing seal leakage in gas turbine engines can reduce specific fuel consumption by such engines thus saving fuel, reducing fuel costs and benefiting the environment.

The planar wall may extend between opposite corners of the cell or between opposite sides of the cell. It operates an axial foil that can induce vortices in the seal leakage flow e.g. the rotating seal leakage flow. It reduces the effective leakage area and thereby reduces seal leakage.

At least 50% of the cells include a single planar wall that extends between opposite corners of the cell to subdivide the cell, the planar wall having substantially the same height as the cell.

At least 50% of the cells include a single planar wall that extends between opposite sides of the cell to subdivide the cell, the planar wall having substantially the same height as the cell.

The height of the planar wall and the height of the cell may be measured from the base or underside of the land, the cells extending from the base or underside of the land.

The planar wall may sub-divide the cell into equal halves. The planar wall may sub-divide the cell into unequal halves.

The polygonal cells can take various forms. For example, the cells can be square, rectangular, hexagonal or octagonal in shape. Various polygonal cells are shown in Figures 2 to 6.

When the polygonal cells are square, all four sides of those cells have equal length and the array may resemble a checkerboard in pattern. Examples of square cells are shown in Figures 4(a), 4(b), 4(e), 6(a) and 6(c).

When the polygonal cells are rectangular, the opposing sides of those cells have equal length. If both pairs of opposing sides have the same length, the array may resemble a checkerboard in pattern. If the pairs of opposing sides have unequal lengths, the array may resemble an elongated checkerboard in pattern. Examples of rectangular cells are shown in Figures 4(a), 4(b), 4(e), 5(a), 5(b), 5(e), 6(a) and 6(c).

When the polygonal cells are hexagonal, the sides of those cells may have equal or unequal length. When the sides are all of equal length, the array may resemble a honeycomb in pattern. When two pairs of opposing sides are of equal length and a third pair of opposing signs are of the same length that is greater than length of the other sides, the array may resemble an elongated honeycomb in pattern. Examples of hexagonal cells are shown in Figures 2(a), 2(b), 2(e), 3(a), 3(b), 3(e), 6(b) and 6(d).

The polygonal cells may be octagonal. The sides of those cells may have equal length or unequal length. Opposing sides made have the same length. One pair of opposing sides may be longer in length than the other pairs opposing sides. When two pairs of opposing sides are of equal length and the other two pairs of opposing signs are of the same length that is greater than length of the pairs of side, the array have resemble a staggered or offset pattern. Examples of octagonal cells are shown in Figures 2(c), 2(d), 2(f), 2(g), 2(h), 3(c), 3(d), 3(f), 3(g), 3(h), 4(c), 4(d), 4(f), 5(c), 5(d) and 5(f).

At least 50% of the cells include a planar wall that subdivides the cell. However at least 60%, at least 65%, at least 70%, at least 75%, at least 80%, at least 85%, at least 90%, at least 95%, at least 98%, at least 99% or 100%, of the cells may include a planar wall that subdivides the cell, more particularly at least 60%, at least 65%, at least 70%, at least 75%, at least 80%, at least 85%, at least 90%, at least 95%, at least 98%, at least 99% or 100%, of the cells may include a single planar wall that subdivides the cell . The higher the percentage of cells including a planar wall that subdivides the cell, the greater reduction in leakage is achieved. It is typically easier and less complex to manufacture a labyrinth seal where 100% of the cells include a planar wall that subdivides the cell rather than less than 100% of the cells include a planar wall that subdivides the cell.

The polygonal cells may be formed in a variety of sizes. A land comprises an array of polygonal cells where the polygonal cells may be have the same size or may be different sizes.

Typically a land comprises an array of polygonal cells where the polygonal cells have the same size. Typical sizes for the walls of polygonal cells are 1/32 inch (0.079 mm), 1/16 inch (1.588 mm) and 1/8 inch (3.175 mm) although one skilled in the art would select a size that is optimal for the intended purpose.

Typically a land comprises an array of polygonal cells where the polygonal cells and the planar walls have the same size. Typical sizes for the walls of polygonal cells and the planar walls are 1/32 inch (0.079 mm), 1/16 inch (1.588 mm) and 1/8 inch (3.175 mm) although one skilled in the art would select a size that is optimal for the intended purpose.

The labyrinth seal of the present disclosure can be manufacturing using known technologies such as node welding, additive layer manufacturing (ALM) and electro discharge machining. The choice of manufacturing depends on labyrinth seal to be made. Honeycomb labyrinth seals are produced conventionally using fabrication of stamped ribbons, or using suitable additive layer methods.

The present disclosure also provides a gas turbine engine that includes one or more of the aforementioned labyrinth seals.

The labyrinth seal of the present disclosure will now be described with reference to the drawings.

**Figure 1** depicts a gas turbine engine that s generally indicated at 10 and has a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second airflow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Labyrinth seals 30 of the present disclosure may be located in various locations within a gas turbine engine. They are typically located within the compressors (14 and 15) or turbines (17, 18 and 19) of a gas turbine engine.

**Figure 2** shows eight embodiments, 2(a)-2(h), of polygonal cells of an array of polygonal cells that form a land of a labyrinth seal of the present disclosure. Figures 2(a), 2(b) and 2(e) show hexagonal cells, the six sides of those cells being of equal length. An array of such cells resembles a honeycomb in pattern. The cells of Figures 2(a), 2(b) and 2(e) in essence only differ in the orientation of the planar wall. The planar wall, resembling a slanted ribbon or axial foil, reduces the area for the bypass flow and discharge coefficient. Figures 2(c), 2(d), 2(f), 2(g) and 2(h) show octagonal cells. The cells of embodiments 2(c), 2(d) and 2(f) resemble staggered or offset hexagonal cells. 2(g) and 2(h) resemble to two half honeycombs of regular and staggered embodiments

**Figure 3** shows eight embodiments, 3(a)-3(h), of polygonal cells of an array of polygonal cells that form a land of a labyrinth seal of the present disclosure. Figures 3(a), 3(b) and 3(e) show elongated hexagonal cells i.e. two pairs of opposing sides are of equal length and a third pair of opposing signs are of the same length that is greater than length of the other sides. An array of such cells resembles a compressed honeycomb in pattern. The cells of Figures 3(a), 3(b) and 3(e) in essence only differ in the orientation of the planar wall. The planar wall, resembling a slanted ribbon or axial foil, reduces the area for the bypass flow and discharge coefficient. Figures 3(c), 3(d), 3(f), 3(g) and 3(h) show octagonal cells. The cells of embodiments 3(c), 3(d) and 3(f) resemble staggered or offset elongate hexagonal cells. 3(g) and 3(h) resemble to two half honeycombs of regular and staggered embodiments

**Figure 4** shows six embodiments, 4(a)-4(f), of polygonal cells of an array of polygonal cells that form a land of a labyrinth seal of the present disclosure. Figures 4(a), 4(b) and 4(e) show cells that are rhombic and square i.e. rhombic as the cells have four sides of equal length and square as the sides meet at right angles. An array of such cells resembles a checkerboard in pattern. The cells of Figures 4(a), 4(b) and 4(e) in essence only differ in the orientation of the planar wall. The planar wall, resembling a slanted ribbon or axial foil, reduces the area for the bypass flow and discharge coefficient. Figures 4(c), 4(d) and 4(f) show octagonal cells that resemble staggered or offset square cells.

**Figure 5** shows six embodiments, 5(a)-5(f), of polygonal cells of an array of polygonal cells that form a land of a labyrinth seal of the present disclosure. Figures 5(a), 5(b) and 5(e) show rectangular cells i.e. the cells have four sides with parallel sides having the same length. An array of such cells resembles a compressed checkerboard in pattern.

The cells of Figures 5(a), 5(b) and 5(e) in essence only differ in the orientation of the planar wall. The planar wall, resembling a slanted ribbon or axial foil, reduces the area for the bypass flow and discharge coefficient. Figures 5(c), 5(d) and 5(f) show octagonal cells that resemble staggered or offset rectangular cells.

**Figure 6** shows four embodiments, 6(a)-6(d), of polygonal cells of an array of polygonal cells that form a land of a labyrinth seal of the present disclosure. Figure 6(a) shows a cell that is rhombic and square i.e. rhombic as the cells have four sides of equal length and square as the sides meet at right angles. An array of such cells resembles a compressed checkerboard in pattern. The planar wall, resembling a slanted ribbon or axial foil, reduces the area for the bypass flow and discharge coefficient. The cell of Figure 6(c) is rhombic like that of Figure 6(a) however one pair of opposed angles are the same and acute and the other pair of opposed angles are the same and obtuse so the cell is not square i.e. rhombic without right angles. Such cell could also be called diamond-shaped. The cell of Figure 6(b) resembles a staggered or offset square cell. The cell of Figure 6(d) resembles a staggered or offset diamond-shaped cell.

While the labyrinth seals of the present disclosure have largely been described above with reference to their use in gas turbine engines, the labyrinth seals can be used for many other purposes that are typically suitable for labyrinth seals, especially so-called honeycomb labyrinth seals. For example the labyrinth seals are also useful in steam turbine engines, for example, to control air or liquid leakage from high pressure regions to low pressure regions in steam turbine engines.

The labyrinth seals of the present disclosure will now be further described with reference to certain examples.

## EXAMPLES

**Figures 2 to 6** show 32 embodiments of polygonal cells that can form of an array of polygonal cells that can form a land of a labyrinth seal of the present disclosure.

The Applicant constructed three arrays of hexagonal cells having sides of equal length giving a cell size of 4.7625 mm (3/16 inch) where every complete cell included a planar wall that subdivided it. Each array simulated a land of a seal in planar form. As a control the Applicant constructed three arrays of hexagonal cells having equal cell size where none of the cells included a planar wall. The arrays were made from plastic. The arrays were adhered alongside each other onto a substrate to hold the arrays for testing fluid leakage. This holder holding three arrays of hexagonal cells having subdividing planar walls is shown in **Figure 7.**

A testing rig 30 was constructed to measure fluid leakage from the lands held in the holder. The testing rig is depicted diagrammatically in **Figure 8.** The rig 30 comprises a pressure chamber 32 formed between a base plate 34, a front wall 36, a removable back wall (not shown), two side walls (not shown) and a removable lid 40. The base plate, front wall, back wall and two side walls are all made of acrylic plastic. One of the side walls includes a removable window 42 through which the interior of the chamber can be accessed and the contents of the chamber can be inspected. The removable lid 40 has a first lid portion 44 and a second lid portion 46. The first lid portion 44, which is made of acrylic plastic, is pivotally attached to the top of the front wall 36. The second lid portion 46 is fixed to the end of the first lid portion 44. The second lid portion 46 was formed by a 3D printing process to represent the land geometry and to accommodate pressure probes 48.

The front wall 36 includes a flow inlet hole 50 through which air can be supplied into the pressure chamber 32 by a first pump (not shown). The front wall 36 also includes an outlet hole 52 through which air in the pressure chamber 32 can be evacuated from the pressure chamber 32 through the action of a second pump (not shown). The testing rig 30 has a pair of baffles 54 that are removably locatable parallel to the front wall 36. The baffles are formed to suitably restrain and engineer the flow of air in the pressure chamber 32.

The testing rig 30 formed part of an experimental set-up that is depicted as a measurement system schematic in **Figure 9.** The schematic shows how the test rig shown in Figure 8 was configured for the various flow measurements that were made to measure the performance of labyrinth seals of the present disclosure.

In use, the removable back wall of the testing rig 30 is removed so the rig is open ended and ventilates to the atmosphere. A land test piece 60, for example in the form a stepped seal, is placed into the pressure chamber 32 through the back of the testing and set against a seal locator 62 so the seal test piece is suitably located under the pressure probes 48 provided in the second lid portion 46. A land of a labyrinth seal to be measured is removably secured onto the land test piece 60. The dimensions of the land are known whereas the axial and radial clearances are determined using depth micrometre measurements. The removable window 42 is mounted in place sealing the side wall into which it is formed. Testing is started by switching on the air supply to the first pump so that air enters the pressure chamber 32 through the flow inlet hole 50 and passes through the baffles 54 towards the labyrinth seal that is located between the land test piece 60 and underside surface of the second lid portion 46 that accommodates the pressure probes 48. Excess air trapped between the front wall 36 and the baffles 54 can be removed from the pressure chamber 32 via the outlet hole 52 by activating the second pump.

The test was conducted with ambient sink pressure and the pressure ratio (Pup/Pdown) varied from 1.2 to 1.5. The rig was scaled up by 3.0 to achieve the engine level Reynolds number. Flow measurements were made using an orifice meter with an accuracy of 1%. The radial clearance was measured with feeler gauges and slip gauges. Feeler gauges were available in steps of 0.01 mm so that the necessary measurement resolution could be achieved. The radial seal clearances were set at three levels, 0.6 mm, 1.5 mm and 3 mm. The axial clearance was inferred by measuring the position of the land test piece relative to the rear end of the rig with a depth micrometer on both sides. The radial clearance was calculated knowing the geometry of the land and the land test pieces.

A gauge R&R (repeatability and reproducibility) study was conducted for the measurement of the axial and radial clearance. This involved four team members measuring eight different axial and radial clearances with two repeats. The standard deviation for the total gauge R&R for the radial clearance was 0.008 mm, hence the 95% certainty interval $\pm 0.016$ mm ($2\sigma$).

For the orifice meter repeatability test, five measurement series were taken. In each series seven readings were taken at regular intervals of 30 seconds totalling to 3 minutes per series. The first point of the first measurement series was taken as a reference point and the measured effective clearance was defined as 100%. All other readings used this value as a reference to show the deviation over time and repeats.

All readings from the various pressure and temperature sensors were fed into a LabVIEW™ (Laboratory Virtual Instrument Engineering Workbench) systems engineering design programme from National Instruments Corporation that recorded all of the data. To be able to convert the voltage readings of the pressure transducers to pressures, the calibration values for the transducers were determined prior to any testing. Additionally the software assessed the offsets (voltage reading at zero gauge pressure) of the transducers before each test run.

Mass flow through the testing rig was calculated by using an orifice meter upstream of the rig. To calculate the mass flow, pressure measurements were taken upstream and downstream of the orifice plate. Additionally the temperature of the flow through the orifice was measured. With the geometry of the orifice, the measurement system was able to calculate the mass flow through the orifice.

Having determined the mass flow rate and the pressure ratio over the labyrinth seal the effective clearance was calculated and used in all subsequent tests to compare the results. The calculation procedure for the effective clearance was implemented into the LabVIEW Programme, when it was adapted for the flow measurements.

The effective clearance (ec) was calculated using the following formula:

$$ec = \frac{\dot{m}\sqrt{T}}{\pi\, p_u\, D\, Q}$$

where

$$Q = \begin{cases} \sqrt{\dfrac{2\gamma}{R\,(\gamma-1)}\left(\left(\dfrac{p_u}{p_d}\right)^{\frac{-2}{\gamma}} - \left(\dfrac{p_u}{p_d}\right)^{-\frac{\gamma+1}{\gamma}}\right)} & \left(\dfrac{p_u}{p_d}\right) < \left(\dfrac{2}{\gamma+1}\right)^{-\frac{\gamma}{\gamma-1}} \\[4mm] \sqrt{\dfrac{\gamma}{R}\left(\dfrac{2}{\gamma+1}\right)^{\frac{\gamma+1}{\gamma-1}}} & \left(\dfrac{p_u}{p_d}\right) > \left(\dfrac{2}{\gamma+1}\right)^{-\frac{\gamma}{\gamma-1}} \end{cases}$$

The baseline design (regular hexagon) seal measurement at a pressure ratio of 1.44 and 0.6 mm seal clearance was used as a reference value for the effective clearance (100%).

Using the testing rig effective clearance (%) and radial clearance (mm) were measured and flow reduction was calculated. The data are provided in Tables 1 and 2 below:

**TABLE 1**

| Effect of Honeycomb Split on Seal Flow at PR = 1.45 and axial clearance 6 mm | | | |
|---|---|---|---|
| Radial Clearance (mm) | Effective Clearance with Regular Honeycomb (%) | Effective Clearance with Split Honeycomb (%) | Flow Reduction (%) |
| 0.6 | 100 | 94 | 6 |
| 1.5 | 169 | 154 | 9 |
| 3 | 254 | 243 | 4.5 |

TABLE 2

| Effect of Honeycomb Split on Seal Flow at radial clearance 0.6 mm and axial clearance 6 mm | | | |
|---|---|---|---|
| Pressure Ratio | Effective Clearance with Regular Honeycomb (%) | Effective Clearance with Split Honeycomb (%) | Flow Reduction (%) |
| 1.1 | 91 | 87 | 4.4 |
| 1.2 | 95 | 89.5 | 5.8 |
| 1.3 | 97 | 92 | 5.2 |
| 1.4 | 99 | 93.6 | 5.5 |
| 1.44 | 100 | 94 | 6.0 |
| 1.49 | 101 | 95 | 5.9 |

The data from Tables 1 and 2 have been represented in graphs that are presented in **Figures 10 and 11.** These graphs show that the lands of hexagonal cells with subdividing single planar walls exhibited less fluid leakage than lands of hexagonal cells without any subdividing planar walls. Adding the subdividing planar walls usefully reduces the area for the bypassing flow thru honeycomb cells and usefully creates more blockages and dead zones to reduce the discharge coefficient and overall effective flow area.

Improved labyrinth seals of the present disclosure reduce seal leakage. Several seals are typically used in modern gas turbine engines for ventilating compressor drums and turbine rim flows that over flow at cruise. By reducing fluid leakage, the use of labyrinth seals of the present disclosure will reduce specific fuel consumption.

It will be understood that the disclosure is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A labyrinth seal having a land that comprises an array of polygonal cells, wherein at least 50% of the cells include a planar wall that subdivides the cell.

2. A labyrinth seal according to claim 1, wherein the planar wall extends between opposite corners of the cell.

3. A labyrinth seal according to claim 2, wherein at least 50% of the cells include a single planar wall that extends between opposite corners of the cell to subdivide the cell, the planar wall having substantially the same height as the cell.

4. A labyrinth seal according to claim 1, wherein the planar wall extends between opposite sides of the cell.

5. A labyrinth seal according to claim 4, wherein at least 50% of the cells include a single planar wall that extends between opposite sides of the cell to subdivide the cell, the planar wall having substantially the same height as the cell.

6. A labyrinth seal according to any preceding claim, wherein at least 70% of the cells include a single planar wall that subdivides the cell.

7. A labyrinth seal according to claim 5, wherein at least 90% of the cells include a single planar wall that subdivides the cell.

8. A labyrinth seal according to claim 7, wherein all of the cells include a single planar wall that subdivides the cell.

9. A labyrinth seal according to any preceding claim wherein the polygonal cells are hexagonal.

10. A labyrinth seal according to claim 9, wherein the sides of the cells all have equal length.

11. A labyrinth seal according to any one of claims 1 to 8, wherein the polygonal cells are octagonal.

12. A labyrinth seal according to any one of claims 1 to 8, wherein the polygonal cells have a total of four sides.

13. A labyrinth seal according to claim 12, wherein parallel sides of the cells have equal length.

14. A labyrinth seal according to claim 13, wherein all sides of the cells have equal length.

15. A gas turbine engine that includes one or more labyrinth seals according to any preceding claim.

**Figure 1**

EP 3 498 981 A1

**Figure 2**

**Figure 3**

(a)    (b)    (c)    (d)    (e)    (f)

**Figure 4**

(a)    (b)    (c)    (d)    (e)    (f)

**Figure 5**

(a)  (b)  (c)  (d)

Figure 6

Figure 7

**Figure 8**

**Figure 9**

**Figure 10**

**Figure 11**

Europäisches
Patentamt

European
Patent Office

Office européen
des brevets

## EUROPEAN SEARCH REPORT

Application Number

EP 18 20 5908

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2011 226559 A (MITSUBISHI HEAVY IND LTD) 10 November 2011 (2011-11-10) * paragraphs [0021] - [0023], [0032] - [0041], [0043] - [0048], [0049] - [0051], [0053] - [5555]; figures 1-3,5,11,12 * | 1-15 | INV. F01D11/00 |
| X | EP 1 985 808 A2 (UNITED TECHNOLOGIES CORP [US]) 29 October 2008 (2008-10-29) * paragraphs [0006], [0008], [0015]; figure 3c * | 1-15 | |

TECHNICAL FIELDS
SEARCHED (IPC)

F01D

The present search report has been drawn up for all claims

| Place of search | Date of completion of the search | Examiner |
|---|---|---|
| Munich | 30 April 2019 | Chatziapostolou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 20 5908

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2019

| Patent document cited in search report | | Publication date | Patent family member(s) | | Publication date |
|---|---|---|---|---|---|
| JP 2011226559 | A | 10-11-2011 | NONE | | |
| EP 1985808 | A2 | 29-10-2008 | EP | 1985808 A2 | 29-10-2008 |
| | | | US | 2008260523 A1 | 23-10-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090072488 A1
- US 4346904 A
- EP 1985807 A2
- EP 1146204 A2

**Non-patent literature cited in the description**

- **CHOUGULE H. H. ; RAMERTH D. ; RAMACHAN- DRAN D.** Low leakage designs for rotor teeth and honeycomb lands in labyrinth seals. *ASME Turbo Expo 2008: Power for Land, Sea and Air,* vol. 4, 1613-1620